## Europäisches Patentamt

## European Patent Office

## Office européen des brevets

(11) Veröffentlichungsnummer: **0 260 608**
**B1**

(12) **EUROPÄISCHE PATENTSCHRIFT**

(45) Veröffentlichungstag der Patentschrift:
24.01.90

(21) Anmeldenummer: 87113270.0

(22) Anmeldetag: 10.09.87

(51) Int. Cl.⁴: **B29C 53/32**, B29D 7/01
// B29L7:00

(54) Verfahren zur Herstellung von Rollen aus extrudierten Folienbahnen.

(30) Priorität: 16.09.86 DE 3631503

(43) Veröffentlichungstag der Anmeldung:
23.03.88 Patentblatt 88/12

(45) Bekanntmachung des Hinweises auf die Patenterteilung:
24.01.90 Patentblatt 90/4

(84) Benannte Vertragsstaaten:
AT CH ES FR GB IT LI SE

(56) Entgegenhaltungen:
DE-A- 3 107 701
GB-A- 1 444 757

(73) Patentinhaber: **Windmöller & Hölscher,
Münsterstrasse 50, D-4540 Lengerich(DE)**

(72) Erfinder: **Henze, Rainer, Dipl.-Ing., Rahestrasse 256,
D-4540 Lengerich(DE)**

(74) Vertreter: **Gossel, Hans K., Dipl.-Ing. et al,
Rechtsanwälte E. Lorenz - B. Seidler M. Seidler -
Dipl.-Ing. H.K. Gossel Dr. I. Philipps - Dr. P.B. Schäuble
Dr. S. Jackermeier - Dipl.-Ing. A. Zinnecker,
Widenmayerstrasse 23 D-8000 München 22(DE)**

**Beschreibung**

Die Erfindung betrifft ein Verfahren zur Herstellung von Rollen aus extrudierten Flachfolienbahnen oder flachgelegten, im Blasverfahren hergestellten Schlauchfolienbahnen aus thermoplastischem Kunststoff, bei dem die Dicke der Bahnen über deren Breite gemessen und bei gemessenen Abweichungen von der mittleren Foliendicke die entsprechenden streifenförmigen Bereiche mit Dickenabweichungen durch Änderung der Temperatur von nebeneinanderliegenden Temperiersektoren oder Veränderung der Breite der entsprechenden Bereiche der Breitschlitz- oder ringförmigen Extrusionsdüsen, aus denen diese streifenförmigen Bereiche extrudiert worden sind, auf die mittlere Foliendicke eingeregelt und zu Folienwickeln aufgerollt werden.

Bei in Blasfolienextrusionsanlagen hergestellten flachgelegten Schlauchfolien und bei in Flachfolienextrusionsanlagen hergestellten Flachfolien lassen sich üblicherweise über die Folienbreite Dickenabweichungen der Folienbahnen von der mittleren Foliendicke nicht vermeiden, so daß sich beim Aufwickeln derartiger Folien zu Folienrollen sogenannte Faßreifen oder Wulste ausbilden, die sich aus der Überlagerung von Dick- und/oder Dünnstellen ergeben. Folienrollen mit faßreifenartigen Wulsten weisen nicht nur ein unschönes Aussehen auf, die Wulste führen auch dazu, daß die von der Rolle abgewickelte Folienbahn nicht völlig eben und flach liegt, so daß sich Schwierigkeiten bei der späteren Verarbeitung ergeben können.

Aus der DE-PS 20 35 584 ist eine Vorrichtung und ein Verfahren zur Herstellung von zylindrischen Rollen aus flachgelegten, im Blasverfahren hergestellten Schlauchfolien bekannt, bei dem die aufgeblasene Schlauchfolie durch um etwa 360° reversierende Flachlegeplatten flachgelegt wird, so daß vorhandene Dick- und Dünnstellen beim Aufwickeln der flachgelegten Schlauchfolie zu Folienwickeln nach Art des Seilwickelns verteilt werden.

Während nach dem aus der DE-PS 20 35 584 bekannten Verfahren Foliendick- und/oder -dünnstellen lediglich über die Breite der Folienrolle zur Erzielung zylindrischer Rollen verteilt, aber nicht beseitigt werden, sind beispielsweise aus den DE-OS 29 47 293 und 30 06 566 Verfahren der eingangs angegebenen Art bekannt, bei denen zur Erzielung möglichst zylindrischer Rollen in den Folienbahnen längsverlaufende Dünn- und Dickstellen auf die mittlere Foliendicke eingeregelt werden. Ist aber in der Flachfolie oder in der flachgelegten Schlauchfolienbahn ein längsverlaufender streifenförmiger Bereich mit einer Dickstelle vorhanden, summiert sich diese durch Überlagerung der aufgewickelten Lagen ebenfalls zu einem sogenannten Faßreifen oder einer Wulst. Ist die Dickstelle durch entsprechende Einregelung auf die mittlere Foliendicke beseitigt worden, drückt sich der zuvor gebildete ringförmige Wulst auch durch die folgenden auf die mittlere Foliendicke eingeregelten Wickellagen durch, so daß diese sickenartig verformt werden. Diese Verformungen bleiben in der abgewickelten Folienbahn als Aufwölbungen erhalten, so daß sich bei deren Verarbeitung Schwierigkeiten ergeben können.

Aufgabe der Erfindung ist es daher, ein Verfahren der eingangs angegebenen Art zu schaffen, nach dem sich zylindrische Rollenwickel nach Beseitigung von Dick- und Dünnstellen durch Einregelung auf die mittlere Foliendicke auch dann erreichen lassen, wenn mehrere Windungen mit Dick- und/oder Dünnstellen übereinandergewickelt worden sind, durch die sich in der bildenden Folienrolle Wulste ausgebildet haben.

Erfindungsgemäß wird diese Aufgabe bei einem Verfahren der gattungsgemäßen Art dadurch gelöst, daß nach Ermittlung jeweils eines streifenförmigen Längenabschnitts der Bahn mit einer Dickstelle diesem folgend ein Abschnitt mit einer im Toleranzbereich liegenden Dünnstelle extrudiert wird, dessen Länge so gewählt wird, daß sich beide Längenabschnitte in der Rolle durch Überlagerung etwa zur mittleren Foliendicke mitteln.

Nach dem erfindungsgemäßen Verfahren wird also nach dem Erfassen einer Dickstelle gezielt eine diese kompensierende Dünnstelle extrudiert, so daß nach einer oder mehreren Windungen die Dickstelle durch Überlagerung mit Dünnstellen kompensiert und ein zylindrischer Rollenwickel erreicht wird. Ist in der erfindungsgemäßen Weise der Faßreifen oder die Wulst durch gezielt extrudierte Dünnstellen kompensiert worden, wird der entsprechende streifenförmige Bereich auf die mittlere Foliendicke eingeregelt, so daß immer Schlauchfolienbahnen angestrebt werden, deren Dicke über die gesamte Folienbreite der mittleren Foliendicke entspricht. Auf Faßreifen bildende Dickstellen kann ohne weiteres mit gezielt extrudierten Dünnstellen geantwortet werden, so lange diese im Dickentoleranzbereich liegen.

Nach einer vorteilhaften Ausgestaltung ist vorgesehen, daß die Länge der Abschnitte der korrigierenden Dünnstellen größer ist als die Länge des zu kompensierenden Abschnitts mit einer Dickstelle. Auf diese Weise können die kompensierenden Dünnstellen stärker der mittleren Foliendicke angenähert werden, ohne an die Grenzen des Toleranzbereichs gehen zu müssen.

Das erfindungsgemäße Verfahren läßt sich in günstiger Weise durch einen von einem Mikrocomputer gesteuerten Regler ausführen, der errechnet, mit welcher optimalen Dünnstelle auf eine eine Wulst bildende Dickstelle zu antworten ist.

Sollten sich in der bildenden Folienrolle nutförmige Ringbereiche infolge von Überlagerung von Dünnstellen ausbilden, können diese in komplementärer Weise mit Dickstellen kompensiert werden.

Ein Ausführungsbeispiel der Erfindung wird nachstehend anhand der Zeichnung erläutert. In dieser zeigt

Fig. 1 eine Seitenansicht einer Flachfolienextrusionsanlage mit nachgeschalteter Wickeleinrichtung in schematischer Darstellung,

Fig. 2 eine Draufsicht auf die Anlage nach Fig. 1 und

Fig. 3 und 4 Schnitte durch mehrere Folienlagen der Wickelrolle mit Dickstellen und kompensierenden Dünnstellen.

In den Trichter 2 aufgegebenes Kunststoffgranulat wird in dem Extruder 1 aufgeschmolzen und durch diesen über die Leitung 3 der Breitschlitzdüse 4 zugeführt. Die aus der Breitschlitzdüse 4 austretende noch weichplastische Flachfolie 5 trifft auf den Mantel des Kühlzylinders 6. Über Leitwalzen 7, 8 wird die Flachfolie 5 zu der Wickeleinrichtung 9 geleitet und dort zu der Folienrolle 10 aufgewickelt. Ist ein Folienwickel gewünschten Durchmessers gebildet worden, wird die Flachfolie 5 durchtrennt und mit dem Wickeln einer neuen Folienrolle begonnen.

Das Dickenprofil der extrudierten Flachfolienbahn 5 wird ständig durch den Dickenmesser 11 gemessen, der aus einer kontinuierlich über die Breite der extrudierten Folienbahn hin- und hergeführten Meßeinrichtung besteht.

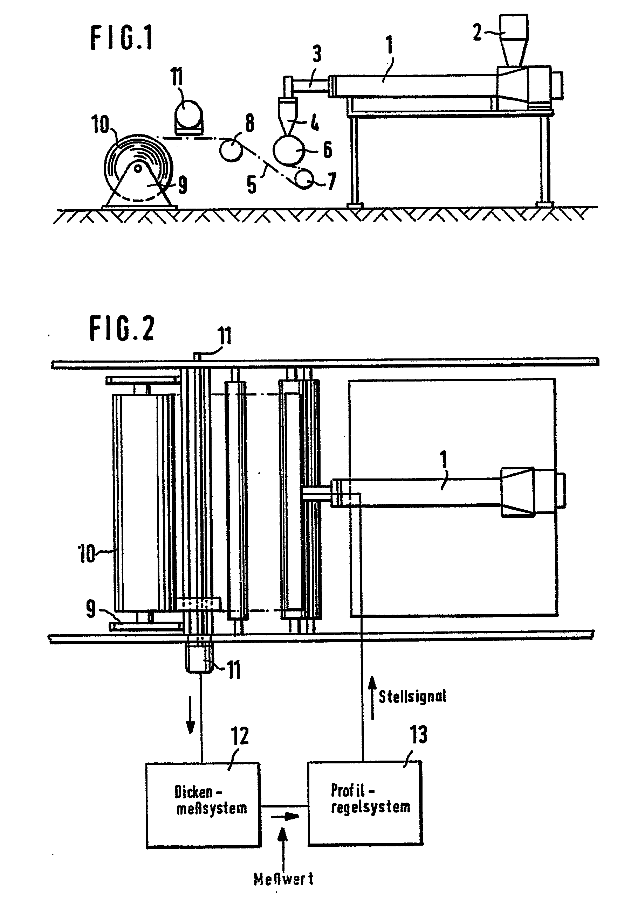

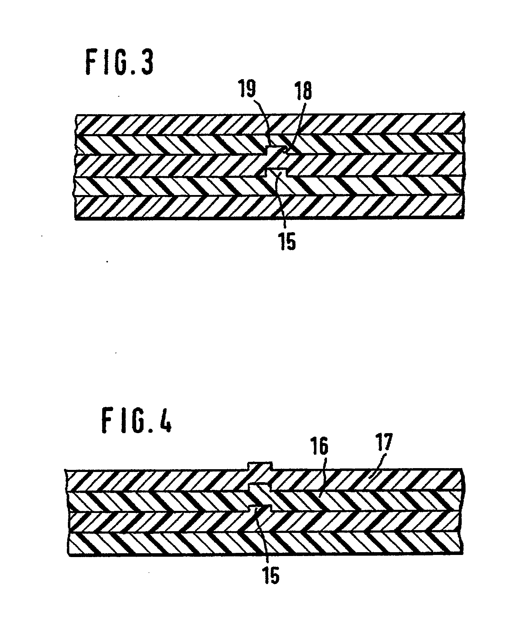

Die Signale der Meßvorrichtung 11 werden über das Dickenmeßsystem 12 dem Profilregelsystem 13 zugeführt, das einen Mikroprozessor enthält. Die Breitschlitzdüse 4 ist in Temperiersektoren unterteilt, die ihre Stellsignale von dem Profilregelsystem 13 erhalten. Die Flachfolienextrusionsanlage nach den Fig. 1 und 2 sowie die zugehörige Regeleinrichtung entspricht der in der DE-OS 30 06 566 beschriebenen, auf die Bezug genommen wird.

In Fig. 4 ist schematisch dargestellt, daß sich eine in Umfangsrichtung streifenförmig über die sich bildende Folienrolle erstreckende Dickstelle auch dann durch die diese überlagernden Wickellagen 16, 17 durchdrückt, wenn diese keine Dickstellen aufweisen und bereits wieder auf die mittlere Foliendicke eingeregelt worden sind.

Um sich über den Durchmesser der Wickelrolle sickenartige Dickstellen zu vermeiden, werden Dickstellen 15 oder durchgedrückte Dickstellen 18 durch gezielte Dünnstellen 19 in der aus Fig. 3 ersichtlichen Weise kompensiert.

Der in dem Profilregelsystem 13 vorhandene Rechner erfaßt die gemessenen Dick- oder Dünnstellen sowohl nach ihrer Länge als auch nach ihrer Lage, so daß auf aufgewickelte Dick- und/oder Dünnstellen gezielt mit kompensierenden Dick- oder Dünnstellen geantwortet werden kann.

## Patentansprüche

1. Verfahren zur Herstellung von Rollen aus extrudierten Flachfolienbahnen oder flachgelegten, im Blasverfahren hergestellten Schlauchfolienbahnen aus thermoplastischem Kunststoff, bei dem die Dicke der Bahnen über deren Breite gemessen und bei gemessenen Abweichungen von der mittleren Foliendicke die entsprechenden streifenförmigen Bereiche mit Dickenabweichungen durch Änderung der Temperatur von nebeneinanderliegenden Temperiersektoren oder Veränderung der Breite der entsprechenden Bereiche der Breitschlitz-oder ringförmigen Extrusionsdüsen, aus denen diese streifenförmigen Bereiche extrudiert worden sind, auf die mittlere Foliendicke eingeregelt und zu Folienwickeln aufgerollt werden, dadurch gekennzeichnet, daß nach Ermittlung jeweils eines streifenförmigen Längenabschnitts der Bahn mit einer Dickstelle diesem folgend ein Abschnitt mit einer im Toleranzbereich liegenden Dünnstelle extrudiert wird, dessen Länge so gewählt wird, daß sich beide Längenabschnitte in der Rolle durch Überlagerung etwa zu der mittleren Foliendicke mitteln.

2. Verfahren nach Anspruch 1, dadurch gekennzeichnet, daß die Länge der Abschnitte der korrigierenden Dünnstellen größer ist als die Länge des zu kompensierenden Abschnitts mit einer Dickstelle.

## Revendications

1. Procédé pour fabriquer des rouleaux faits de bandes de feuilles plates extrudées ou de bandes de film tubulaire couché à plat, fabriqué en matiére thermoplastique par soufflage, dans lequel l'épaisseur des bandes est mesurée sur leur largeur et si des fluctuations sont relevées dans l'épaisseur moyenne du film, les zones en forme de rayure présentant des fluctuations d'épaisseur sont adaptées pour réaliser l'épaisseur moyenne du film en changeant la température des secteurs d'équilibrage de la température adjacents ou en changeant la largeur des zones appropriée des filières à fente large ou filières d'extrusion annulaire par lesquelles ces zones en forme de rayures ont été extrudées et ensuite enroulées en bobines de film, caractérisé en ce que après la détection d'une section longitudinale en forme de rayure ayant une zone épaissie, une section avec une zone plus mince dans les limites de tolérance est ensuite extrudée, la longueur de cette zone étant choise de manière à ce que l'épaisseur moyenne des deux sections longitudinales, lorsqu'elles sont superposées dans la bobine, est approximativement équivalente à l'épaisseur moyenne approximative du film.

2. Procédé selon la revendication 1, caractérisé en ce que la longueur des sections de zones minces correctrices est supérieure à la longueur de la section qui présente une zone épaissie qui doit être compensée.

## Claims

1. A method for making rolls from extruded flat sheet-webs, or from laid flat tubular sheet-webs made from a thermoplastic material in the inflation extrusion process, wherein the thickness of the webs is measured over their width and wherein, in the case of any measured deviations from the mean sheet thickness the respective strip-shaped sectors with thickness deviations are adjusted to the mean sheet thickness by altering the temperature of adjacent temperature regulating sectors or by altering the width of the respective zones of the fish tail nozzles or annular extrusion nozzles from which these strip-shaped sectors have been extruded and wherein they are rolled up into sheet rolls, characterized in that after a respective strip-shaped longitudinal sector of the web with a thick zone has been discovered, a sector following it will be extruded with a thin zone lying within the tolerance range whose length is chosen in such a way that the longitudinal sectors in the roll average out in the roll approximately to the mean sheet thickness by superposition.

2. A method according to claim 1, characterized in that the length of the sectors of the correcting thin zone is greater than the length of the sector with the thick zone be compensated.

FIG.1

FIG.2

Stellsignal

| 12 | | 13 |
|---|---|---|
| Dicken-<br>meßsystem | | Profil-<br>regelsystem |

Meßwert

# FIG.3

# FIG.4